# EUROPEAN PATENT SPECIFICATION

(11) **EP 2 045 986 B1**
(45) Date of publication and mention of the grant of the patent: **02.03.2011**
(21) Application number: 07117804.0
(22) Date of filing: 03.10.2007
(51) Int. Cl.: H04L 12/58

(54) **Method and device for collaborative electronic mail filtering**
Verfahren und Vorrichtung zur kollaborativen Filterung elektronischer Post
Procédé et dispositif de filtrage collaboratif de courrier électronique

(43) Date of publication of application: 08.04.2009
(73) Proprietor: RESEARCH IN MOTION LIMITED, Waterloo, Ontario N2L 3W8 (CA)
(72) Inventor: Kyprianou, Nikos, 2109 Nicosia (CY)
(74) Representative: Patel, Binesh

(56) References cited:
- EP-A- 0 813 162
- GB-A- 2 404 052
- US-A1- 2005 080 856

## Description

The present invention relates generally to electronic mail filtering and specifically to a system and method for filtering unsolicited electronic mail using collaborative measures.

### BACKGROUND

The continued growth of telecommunication networks has led to the proliferation of the Internet. The Internet is a worldwide, publicly accessible network of interconnected computer networks that transmit data using a standard protocol. The Internet consists of smaller domestic, academic, business, and government networks, which together carry various information and services, such as electronic mail, online chat, file transfer, Web pages and other documents of the World Wide Web.

The growth of the Internet has led to a subsequent increase in the use of personal computing devices. In addition to personal computers and notebooks, there has been an increase in the adoption of Personal Digital Assistants (PDAs) and smart-phones such as the Blackberry^{®} by Research in Motion Limited or the Treo^{™} by Palm, Inc.

However, the expansion of the Internet is not without its problems. One such problem is referred to as spam, or spamming. Spamming is generally understood to mean the abuse of electronic messaging systems to indiscriminately send unsolicited bulk messages. While the most widely recognized form of spam is e-mail spam, the term may be applied to similar abuses in other media.

Spamming is economically viable because spammers have little to no operating costs beyond the management of their mailing lists. Furthermore, it is difficult to hold spammer accountable for their mass mailings. Because the cost associated with sending spam is relatively low to the spammer, there are a large number of spammers and the volume of unsolicited mail has become very high.

Accordingly, productivity of employees decreases as they attempt to filter out useful messages from unsolicited email. Furthermore, network bandwidth is wasted transmitting spam. This is particularly true for mobile communication devices, such as PDAs.

In an attempt to reduce the effect of spam, many e-mail servers offer some sort of spam filter, using a number of different filtering algorithms. For example, mobile communication devices with e-mail capability are typically deployed within an enterprise employing an existing Information Technology (IT) infrastructure. In such an infrastructure, messaging servers such as Microsoft Exchange server and IBM Lotus Domino are coupled with a routing server or software. The messaging servers often implement a spam filter to reduce the number of spam messages being transmitted to the mobile communication device.

However, even when spam filters are in place, unsolicited e-mail messages can still get through. Further, once an e-mail is in the user's inbox, it has to be manually removed. Accordingly, it is desirable to provide e-mail filtering that further improves on current filtering implementations.

Document US 2005/080856 A1 (KIRSCH STEVEN T) 14 April 2005 provides an email filtering method and system that categorize received email messages based on information bout the sender. Data about the sender is contained in the message and is used to identify the actual sender of the message using a signature combining pieces of information from the message header or derived from information in the message header. This and other information about the message is then sent by each member of an email network to one or more central databases which stores the information and compiles statistics about emails sent by the sender to indicate the likelihood that the email is unsolicited and determine the reputation of the sender. Information from the central database is then sent to recipients in order to determine the likelihood that a received email message is spam.

Document EP-A-0 813 162 (SUN MICROSYSTEMS INC) 17 December 1997 provides apparatus, methods, systems and computer program products for email systems with the capability for a group of trusted users to collectively determine whether a given email message is junk email. If the given email message is determined to be junk mail, the email systems of other trusted users in the group dispose of unviewed copies the junk email. Thus, the invention reduces the exposure of junk email messages to the group of trusted users.

### SUMMARY

In accordance with an aspect of the description there is provided a method for collaboratively maintaining a filter program for a device, the method comprising the steps of registering the filter program with a remote program to receive only spam e-mail filter updates for filter expressions that meet specific criteria, receiving notification messages from the remote program, the notification messages comprising said spam e-mail filter updates defining at least one filter expression received at the remote program from a third party, applying the filter expression at the filter program for identifying spam e-mail messages, and filtering the spam e-mail messages to the device in accordance with the filter program with the filter expression that meets specific criteria.

In accordance with a further aspect of the description there is provided a computer readable medium and a computing device configured to implement the steps described above.

### BRIEF DESCRIPTION OF THE DRAWINGS

Embodiments will be described by way of example only with reference to the following figures in which:
**Fig 1** is a block diagram illustrating a communication infrastructure; and
**Fig 2** is a flow chart illustrating operation of an embodiment of the invention.

### DETAILED DESCRIPTION OF THE PREFERRED EMBODIMENTS

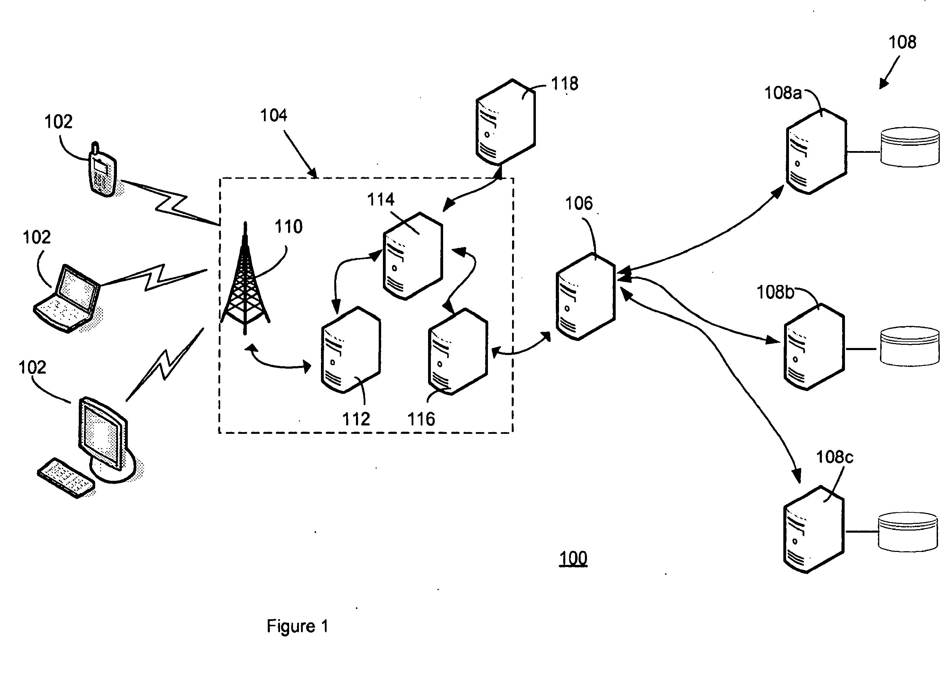

For convenience, like numerals in the description refer to like structures in the drawings. Referring to Figure 1, a communication infrastructure is illustrated generally by numeral 100. The communication infrastructure 100 comprises a plurality of communication devices 102, or simply devices 102, a communication network 104, a gateway server 106, a messaging server 118 and a plurality of data-sources 108.

The devices 102 may include both wired and wireless computing devices such as a desktop computer, a notebook or other portable computer, a smart phone, a personal digital assistant (PDA), and the like. The devices 102 are in communication with the gateway server 106 via the communication network 104. Accordingly, the communication network 104 may include several components such as a wireless network 110, a relay 112, a corporate server 114 and/or a mobile data server 116 for relaying data between the devices 102 and the gateway server 106. The corporate server 114 is also coupled with the messaging server 118. The corporate server includes an e-mail application that interrogates the messaging server 118 for new e-mail messages and forwards them to the appropriate devices 102. The actual configuration of the communication network 104 may vary, depending on the type of device 102, as will be appreciated by a person of ordinary skill in the art.

The gateway server 106 is further in communication with a plurality of the data-sources 108, such as Web services 108a, database services 108b, as well as other enterprise services 108c, via a suitable link. For example, the gateway server 106 is connected with the Web services 108a and database services 108b via Simple Object Access Protocol (SOAP) and Java Database Connectivity (JDBC) respectively. Other types of data-sources 108 and their corresponding links will be apparent to a person of ordinary skill in the art.

In accordance with the present embodiment, a remote spam filter program is provided. In the present embodiment, the remote spam filter program is a spam web service 108a. The spam web service 108a provides spam filter notifications to devices 102 registered therewith. Accordingly, a number of devices 102 are typically registered with the spam web service 108a. In the present embodiment, this is achieved by the devices 102 submitting a notification request to the spam web service 108a.

The devices 102 can register to receive all filter notifications. Alternatively, the devices 102 can register to receive only filter notifications for filter expressions that meet specific criteria. Such criteria can include for example, the type of spam filter, the origin of the spam filter (i.e. who submitted the spam filter) and the like, and can be submitted along with the notification request.

Accordingly, a collaborative spam filter can be implemented for the registered devices 102. That is, when one of devices 102 identifies an e-mail message as spam, a message is sent to the web service 108a. The message includes a filter expression for the spam e-mail message. The web-service 108a then broadcasts a notification message to the registered devices 102, providing them with the filter expression as an update to their existing spam filter.

In the present embodiment, communication between the devices 102 and the web service 108a is facilitated by a filter application executing on the mobile data server 116. The filter application is further designed to interact with the e-mail application executing on the corporate server 114.

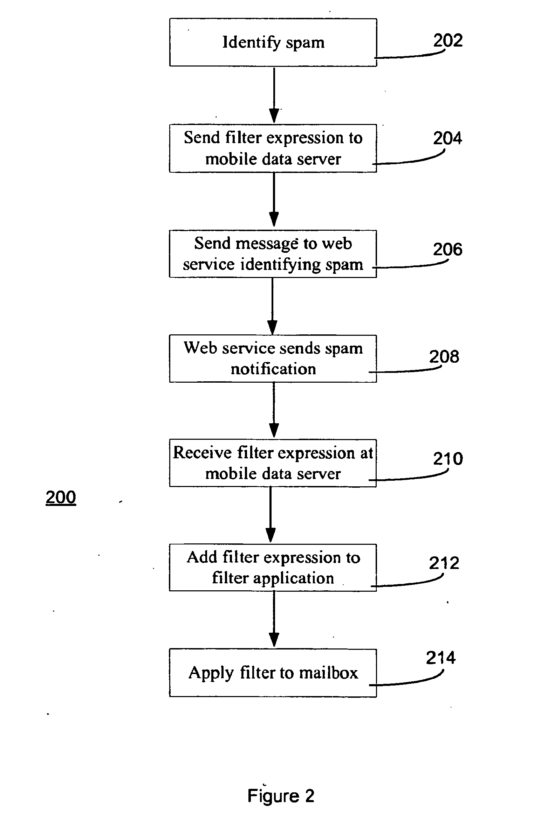

Referring to Figure 2, a flow chart illustrating steps for implementing the present embodiment is shown generally by numeral 200. In step 202, a received e-mail message is identified as spam.

In step 204, the device 102 sends a filter expression to the filter application on the mobile data server 116 that would identifying the spam e-mail message. The filter expression can be one or more of a number of different terms used to identify the message as spam, including, for example, an originating e-mail address, a subject line, content, and/or a particular phrase.

In step 206, the filter application sends a message to the spam web service 108a identifying the filter expression received from the device 102.

In step 208, the spam web service 108a transmits the filter expression to the mobile data servers 116 correlated with target devices using a notification message. Target devices are those devices 102 that are registered with the spam web service 108a and for which the filter expression meets the specific criteria, if any, defined during registration.

In step 210, the filter applications executing on 116 mobile data servers 114 correlated with the target devices receive the notification message and retrieve the filter expression. In step 212, the filter expression is added to a collection of previously defined filter expressions and in step 214 it is applied to messages in an inbox for the device 102. By applying the filter expression, the filter application filters potential spam e-mails from the device 102. The filter application can apply the filter expression in a number of different ways, as will be appreciated by a person of ordinary skill in the art. For example, the filter application can inhibit e-mail messages identified as spam from being sent to the device 102. Alternatively, e-mail messages identified as spam can be marked accordingly and transmitted to the device 102. In this example, spam e-mail messages can be identified visually using a specific icon, isolated in a spam folder or both.

Further, the filter application can access the device's mailbox on the messaging server 118 and apply the filter expression. Therefore, even if a spam message had already been delivered to the device 102, the filter application can still identify the message as spam and either delete the e-mail message from the device or mark it as spam, as discussed above.

As an option, each user can individually configure the filter application for his/her device 102 to allow or block specific e-mail addresses and/or content to help reduce the chance that a valid message is misidentified as a spam or vice versa.

Accordingly, it will be appreciated by a person of ordinary skill in the art that the filter application described above provide the ability to share filter definitions between willing participants. By sharing filter definitions, it is likely that each device 102 will receive less spam e-mail messages than relying on establishing it's own filter definitions.

Using the foregoing specification, the invention may be implemented as a machine, process or article of manufacture by using standard programming and/or engineering techniques to produce programming software, firmware, hardware or any combination thereof.

Any resulting program(s), having computer-readable program code, may be embodied within one or more computer-usable media such as memory devices or transmitting devices, thereby making a computer program product or article of manufacture according to the invention. As such, the terms "software" and "application" as used herein are intended to encompass a computer program existent (permanently, temporarily, or transitorily) on any computer-usable medium such as on any memory device or in any transmitting device.

Examples of memory devices include, hard disk drives, diskettes, optical disks, magnetic tape, semiconductor memories such as FLASH, RAM, ROM, PROMS, and the like. Examples of networks include, but are not limited to, the Internet, intranets, telephone/modem-based network communication, hard-wired/cabled communication network, cellular communication, radio wave communication, satellite communication, and other stationary or mobile network systems/communication links.

A machine embodying the invention may involve one or more processing systems including, for example, CPU, memory/storage devices, communication links, communication/transmitting devices, servers, I/O devices, or any subcomponents or individual parts of one or more processing systems, including software, firmware, hardware, or any combination or subcombination thereof, which embody the invention as set forth in the claims.

Using the description provided herein, those skilled in the art will be readily able to combine software created as described with appropriate general purpose or special purpose computer hardware to create a computer system and/or computer subcomponents embodying the invention, and to create a computer system and/or computer subcomponents for carrying out the method of the invention.

Further, it will be apparent that various modifications and additions can be made to the embodiments discussed herein without departing from the scope of the present invention. For example, although the previous embodiment described the notification as being transmitted to the filter application, it may also be possible to transmit the notifications directly from the web service 108a to the device 102 itself.

As another example, in the previous embodiment the filter expression for an identified spam e-mail message is created on the device 102, submitted to the filter application on the mobile data server 116, and then submitted to the web service 108a. In an alternative embodiment, the device 102 need only identify the spam e-mail message. In this embodiment, the filter application automatically parses the spam e-mail message and determines the filter expression using a predefined algorithm.

In yet another example, the filter application is described as executing on the mobile data server 116. In an alternative embodiment, if the device 102 is sufficiently sophisticated to execute it, the filter application can be installed and executed direction on the device 102 itself.

Accordingly, the scope of the present invention should not be limited by the particular embodiments discussed above, but should be defined only by the claims set forth below.

## Claims

1. A method for collaboratively maintaining a filter program for a device (102), the method comprising the steps of:
registering the filter program with a remote program (108a) to receive only spam e-mail filter updates for filter expressions that meet specific criteria;
receiving (210) notification messages from the remote program (108a), the notification messages comprising said spam e-mail filter updates defining at least one filter expression received at the remote program (108a) from a third party;
applying (212) the filter expression at the filter program for identifying spam e-mail messages; and
filtering (214) the spam e-mail messages to the device (102) in accordance with the filter program with the filter expression that meets specific criteria.

2. The method of claim 1, wherein the filter program is executing on a mobile data server (114), the mobile data server relaying data between the devices and the gateway server.

3. The method of claim 1, wherein the filter program is executing on the device (102).

4. The method of any preceding claim, wherein the step of filtering the spam e-mail messages comprises inhibiting the spam e-mail messages from being transmitted to the device (102).

5. The method of any preceding claim, wherein the step of filtering the spam e-mail messages comprises adding an identifier to the spam e-mail message for display on the device (102).

6. The method of any preceding claim, wherein the step of registering the filter program with the remote program (108a) comprises identifying predefined specific criteria for the filter expression in order to receive the notification message.

7. A computer readable medium comprising instructions, which, when executed on a computing device (116) configured to collaboratively maintain a filter program for a mobile communication device (102), cause the computing device to implement the steps of:
registering the filter program with a remote program (108a) to receive only spam e-mail filter updates for filter expressions that meet specific criteria;
receiving (210) notification messages from the remote program (108a), the notification messages comprising said spam e-mail filter updates defining at least one filter expression;
applying (212) the filter expression at the filter program for identifying spam e-mail messages; and
filtering (214) the spam e-mail messages to the device (102) in accordance with the filter program with the filter expression that meets specific criteria.

8. The computer readable medium of claim 7, wherein the computing device is a mobile data server (114, 116), the mobile data server relaying data between the devices (102) and the gateway server (110).

9. The computer readable medium of claim 8, wherein the computing device is the mobile communication device (102).

10. A computing system for collaboratively maintaining a filter program for a mobile communication device (102), the communication device configured to communicate with a remote program (108a), the computing system comprising:
storage for storing at least one filter expression; and
a processor configured to:
register the filter program with the remote program (108a) via the communication device (102) in order to receive only spam e-mail filter updates for filter expressions that meet specific criteria;
receive (210) notification messages from the remote program (108a) via the communication device (102), the notification messages comprising said spam e-mail filter updates defining at least one filter expression; ;
apply (212) the filter expression at the filter program for identifying spam e-mail messages; and
filter (214) the spam e-mail messages to the device (102) in accordance with the filter program with the filter expression that meets specific criteria.

11. The computing system of claim 10, wherein the computing system is a mobile data server (116), the mobile data server relaying data between the devices and the gateway server (110).

12. The computing system of claim 10, wherein the computing system is the mobile communication device (102).

13. The computing system of any of claims 10 to 12, wherein the processor is configured to filter the spam e-mail messages by inhibiting the spam e-mail messages from being transmitted to the device (102).

14. The computing system of any of claims 10 to 13, wherein processor is configured to filter the spam e-mail messages by adding an identifier to the spam e-mail message from display on the device (102).

15. The computing system of claims 10 to 14, wherein the processor is configured to register the filter program with the remote program (108a) by identifying predefined specific criteria for the filter expression in order to receive (210) the notification message.

## Patentansprüche

1. Verfahren zum kollaborativen Unterhalten eines Filterprogramms für eine Vorrichtung (102), wobei das Verfahren die Schritte aufweist:
Registrieren des Filterprogramms mit einem entfernten Programm (108a),
um nur Spam-Email-Filter-Aktualisierungen für Filterausdrücke zu empfangen, die spezifische Kriterien erfüllen;
Empfangen (210) von Benachrichtigungsnachrichten von dem entfernten Programm (108a), wobei die Benachrichtigungsnachrichten die Spam-Email-Filter-Aktualisierungen aufweisen, die zumindest einen Filterausdruck definieren, der an dem entfernten Programm (108a) von einem dritten Teilnehmer empfangen wird;
Anwenden (212) des Filterausdrucks an dem Filterprogramm zum Identifizieren von Spam-Email-Nachrichten; und
Filtern (214) der Spam-Email-Nachrichten an die Vorrichtung (102) in Übereinstimmung mit dem Filterprogramm mit dem Filterausdruck, der spezifische Kriterien erfüllt.

2. Verfahren gemäß Anspruch 1, wobei das Filterprogramm auf einem mobilen Datenserver (114) ausgeführt wird, wobei der mobile Datenserver Daten zwischen den Vorrichtungen und dem Gateway-Server übermittelt.

3. Verfahren gemäß Anspruch 1, wobei das Filterprogramm auf der Vorrichtung (102) ausgeführt wird.

4. Verfahren gemäß einem vorhergehenden Anspruch, wobei der Schritt eines Filterns der Spam-Email-Nachrichten aufweist ein Verhindern, dass die Spam-Email-Nachrichten an die Vorrichtung (102) übertragen werden.

5. Verfahren gemäß einem vorhergehenden Anspruch, wobei der Schritt eines Filterns der Spam-Email-Nachrichten aufweist ein Hinzufügen eines Identifizierers zu der Spam-Email-Nachricht zur Anzeige auf der Vorrichtung (102).

6. Verfahren gemäß einem vorhergehenden Anspruch, wobei der Schritt eines Registrierens des Filterprogramms mit dem entfernten Programm (108a) aufweist ein Identifizieren von vordefinierten spezifischen Kriterien für den Filterausdruck, um die Benachrichtigungsnachricht zu empfangen.

7. Computerlesbares Medium, das Anweisungen aufweist, die bei Ausführung auf einer Computervorrichtung (116), die konfiguriert ist zum kollaborativen Unterhalten eines Filterprogramms für eine mobile Kommunikationsvorrichtung (102), die Computervorrichtung veranlassen, die Schritte zu implementieren:
Registrieren des Filterprogramms mit einem entfernten Programm (108a),
um nur Spam-Email-Filter-Aktualisierungen für Filterausdrücke zu empfangen, die spezifische Kriterien erfüllen;
Empfangen (210) von Benachrichtigungsnachrichten von dem entfernten Programm (108a), wobei die Benachrichtigungsnachrichten die Spam-Email-Filter-Aktualisierungen aufweisen, die zumindest einen Filterausdruck definieren;
Anwenden (212) des Filterausdrucks an dem Filterprogramm zum Identifizieren von Spam-Email-Nachrichten; und
Filtern (214) der Spam-Email-Nachrichten an die Vorrichtung (102) in Übereinstimmung mit dem Filterprogramm mit dem Filterausdruck, der spezifische Kriterien erfüllt.

8. Computerlesbares Medium gemäß Anspruch 7, wobei die Computervorrichtung ein mobiler Datenserver (114, 116) ist, wobei der mobile Datenserver Daten zwischen den Vorrichtungen (102) und dem Gateway-Server (110) übermittelt.

9. Computerlesbares Medium gemäß Anspruch 8, wobei die Computervorrichtung die mobile Kommunikationsvorrichtung (102) ist.

10. Computersystem zum kollaborativen Unterhalten eines Filterprogramms für eine mobile Kommunikationsvorrichtung (102), wobei die Kommunikationsvorrichtung konfiguriert ist zum Kommunizieren mit einem entfernten Programm (108a), wobei das Computersystem aufweist:
Speicher zum Speichern zumindest eines Filterausdrucks; und
einen Prozessor, der konfiguriert ist zum:
Registrieren des Filterprogramms mit dem entfernten Programm (108a) über die Kommunikationsvorrichtung (102), um nur Spam-Email-Filter-Aktualisierungen für Filterausdrücke zu empfangen, die spezifische Kriterien erfüllen;
Empfangen (210) von Benachrichtigungsnachrichten von dem entfernten Programm (108a) über die Kommunikationsvorrichtung (102), wobei die Benachrichtigungsnachrichten die Spam-Email-Filter-Aktualisierungen aufweisen, die zumindest einen Filterausdruck definieren;
Anwenden (212) des Filterausdrucks an dem Filterprogramm zum Identifizieren von Spam-Email-Nachrichten; und
Filtern (214) der Spam-Email-Nachrichten an die Vorrichtung (102) in Übereinstimmung mit dem Filterprogramm mit dem Filterausdruck, der spezifische Kriterien erfüllt.

11. Computersystem gemäß Anspruch 10, wobei die Kommunikationsvorrichtung ein mobiler Datenserver (116) ist, wobei der mobile Datenserver Daten zwischen den Vorrichtungen und dem Gateway-Server (110) übermittelt.

12. Computersystem gemäß Anspruch 10, wobei die Kommunikationsvorrichtung die mobile Kommunikationsvorrichtung (102) ist.

13. Computersystem gemäß einem der Ansprüche 10 bis 12, wobei der Prozessor konfiguriert ist zum Filtern der Spam-Email-Nachrichten durch Verhindern, dass die Spam-Email-Nachrichten an die Vorrichtung (102) übertragen werden.

14. Computersystem gemäß einem der Ansprüche 10 bis 13, wobei der Prozessor konfiguriert ist zum Filtern der Spam-Email-Nachrichten durch Hinzufügen eines Identifizierers zu der Spam-Email-Nachricht zur Anzeige auf der Vorrichtung (102).

15. Computersystem gemäß einem der Ansprüche 10 bis 14, wobei der Prozessor konfiguriert ist zum Registrieren des Filterprogramms mit dem entfernten Programm (108a) durch Identifizieren von vordefinierten spezifischen Kriterien für den Filterausdruck, um die Benachrichtigungsnachricht zu empfangen (210).

## Revendications

1. Procédé de maintenance collaborative d'un programme de filtrage pour un dispositif (102), le procédé comprenant les étapes consistant à :
enregistrer le programme de filtrage auprès d'un programme distant (108a) afin de ne recevoir que des mises à jour de filtrage de pourriel pour des expressions de filtrage qui répondent à des critères spécifiques ;
recevoir (210) du programme distant (108a) des messages de notification, les messages de notification comprenant lesdites mises à jour de filtrage de pourriel qui définissent au moins une expression de filtrage reçue par le programme distant (108a) en provenance d'une tierce partie ;
appliquer (212) l'expression de filtrage dans le programme de filtrage afin d'identifier les messages de pourriel ; et
filtrer (214) les messages de pourriel vers le dispositif (102) conformément au programme de filtrage, avec l'expression de filtrage répondant à des critères spécifiques.

2. Procédé selon la revendication 1, dans lequel le programme de filtrage s'exécute sur un serveur de données mobile (114), le serveur de données mobile relayant des données entre les dispositifs et le serveur-passerelle.

3. Procédé selon la revendication 1, dans lequel le programme de filtrage s'exécute sur le dispositif (102).

4. Procédé selon l'une quelconque des revendications précédentes, dans lequel l'étape de filtrage des messages de pourriel comprend l'étape consistant à interdire la transmission des messages de pourriel vers le dispositif (102).

5. Procédé selon l'une quelconque des revendications précédentes, dans lequel l'étape de filtrage des messages de pourriel comprend l'étape consistant à ajouter au message de pourriel un identificateur destiné à s'afficher sur le dispositif (102).

6. Procédé selon l'une quelconque des revendications précédentes, dans lequel l'étape d'enregistrement du programme de filtrage auprès du programme distant (108a) comprend l'étape consistant à identifier des critères spécifiques prédéterminés pour l'expression de filtrage, afin de recevoir le message de notification.

7. Support lisible par ordinateur, comprenant des instructions qui, lorsqu'elles sont exécutées sur un dispositif informatique (116) configuré pour réaliser une maintenance collaborative d'un programme de filtrage pour un dispositif de communication mobile (102), commandent au dispositif informatique de mettre en oeuvre les étapes consistant à :
enregistrer le programme de filtrage auprès d'un programme distant (108a) afin de ne recevoir que des mises à jour de filtrage de pourriel pour des expressions de filtrage qui répondent à des critères spécifiques ;
recevoir (210) du programme distant (108a) des messages de notification, les messages de notification comprenant lesdites mises à jour de filtrage de pourriel qui définissent au moins une expression de filtrage ;
appliquer (212) l'expression de filtrage dans le programme de filtrage afin d'identifier les messages de pourriel ; et
filtrer (214) les messages de pourriel vers le dispositif (102) conformément au programme de filtrage, avec l'expression de filtrage répondant à des critères spécifiques.

8. Support lisible par ordinateur selon la revendication 7, dans lequel le dispositif informatique est un serveur de données mobile (114, 116), le serveur de données mobile relayant des données entre les dispositifs (102) et le serveur-passerelle (110).

9. Support lisible par ordinateur selon la revendication 8, dans lequel le dispositif informatique est le dispositif de communication mobile (102).

10. Système informatique destiné à assurer la maintenance collaborative d'un programme de filtrage pour un dispositif de communication mobile (102), le dispositif de communication étant configuré pour communiquer avec un programme distant (108a), le système informatique comprenant :
une mémoire destinée à stocker au moins une expression de filtrage ; et
un processeur, configuré pour :
enregistrer le programme de filtrage auprès du programme distant (108a), via le dispositif de communication (102), afin de ne recevoir que des mises à jour de filtrage de pourriel pour des expressions de filtrage qui répondent à des critères spécifiques ;
recevoir (210) du programme distant (108a) des messages de notification, les messages de notification comprenant lesdites mises à jour de filtrage de pourriel qui définissent au moins une expression de filtrage ;
appliquer (212) l'expression de filtrage dans le programme de filtrage afin d'identifier les messages de pourriel ; et
filtrer (214) les messages de pourriel vers le dispositif (102) conformément au programme de filtrage, avec l'expression de filtrage répondant à des critères spécifiques.

11. Système informatique selon la revendication 10, dans lequel le système informatique est un serveur de données mobile (116), le serveur de données mobile relayant des données entre les dispositifs et le serveur-passerelle (110).

12. Système informatique selon la revendication 10, dans lequel le système informatique est le dispositif de communication mobile (102).

13. Système informatique selon l'une quelconque des revendications 10 à 12, dans lequel le processeur est configuré pour filtrer les messages de pourriel en interdisant l'émission des messages de pourriel vers le dispositif (102).

14. Système informatique selon l'une quelconque des revendications 10 à 13, dans lequel le processeur est configuré pour filtrer les messages de pourriel en ajoutant au message de pourriel un identificateur destiné à s'afficher sur le dispositif (102).

15. Système informatique selon l'une quelconque des revendications 10 à 14, dans lequel le processeur est configuré pour enregistrer le programme de filtrage auprès du programme distant (108a) en identifiant des critères spécifiques prédéterminés pour l'expression de filtrage, afin de recevoir (210) le message de notification.
